(19) Europäisches Patentamt
European Patent Office
Office européen des brevets

(11) Veröffentlichungsnummer: **0 058 332**
**B1**

(12) # EUROPÄISCHE PATENTSCHRIFT

(45) Veröffentlichungstag der Patentschrift: **02.01.85**

(51) Int. Cl.³: **C 09 B 15/00**

(21) Anmeldenummer: **82100696.2**

(22) Anmeldetag: **02.02.82**

(54) **Verfahren zur Herstellung von Acridinfarbstoffen.**

(30) Priorität: **13.02.81 DE 3105361**

(43) Veröffentlichungstag der Anmeldung: **25.08.82 Patentblatt 82/34**

(45) Bekanntmachung des Hinweises auf die Patenterteilung: **02.01.85 Patentblatt 85/1**

(84) Benannte Vertragsstaaten: **CH DE FR GB LI**

(56) Entgegenhaltungen:
**DE - C - 59 179**
**DE - C - 67 609**
**DE - C - 70 935**
**DE - C - 230 412**
**DE - C - 495 115**

(73) Patentinhaber: **BAYER AG, Konzernverwaltung RP Patentabteilung, D-5090 Leverkusen 1 Bayerwerk (DE)**

(72) Erfinder: **Raue, Roderich, Dr., Berta-von-Suttner-Strasse 48, D-5090 Leverkusen 1 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



BUNDESDRUCKEREI BERLIN

**Beschreibung**

Gegenstand der Erfindung ist ein Verfahren zur Herstellung von Acridinfarbstoffen der allgemeinen Formel

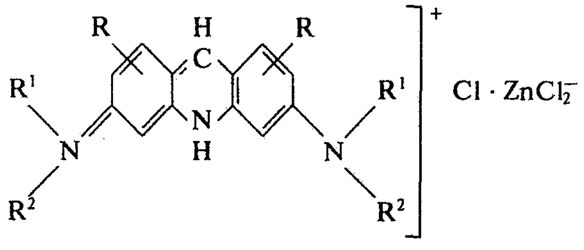

(I)

worin

R für Wasserstoff, $C_1$- bis $C_4$-Alkyl, $C_1$- bis $C_4$-Alkoxy oder Halogen und
$R^1$ und $R^2$ unabhängig voneinander für $C_1$- bis $C_4$-Alkyl stehen und,

die Alkyl- und Alkoxyreste durch Hydroxy, $C_1$- bis $C_4$-Alkoxy, $C_1$- bis $C_4$-Alkoxy-$C_1$- bis $C_4$-alkoxy, $C_1$- bis $C_4$-Acyloxy, Halogen oder Cyan substituiert sein können, dadurch gekennzeichnet, daß man Di-(nitro-amino-phenyl)-methan-Verbindungen der allgemeinen Formel

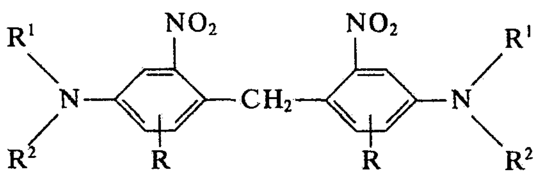

(II)

worin
R, $R^1$ und $R^2$ die oben angegebene Bedeutung haben, in Salzsäure löst und der Einwirkung von Zinkpulver unterwirft.

Geeignete gegebenenfalls substituierte $C_1$- bis $C_4$-Alkylreste sind:
Methyl, Ethyl, Propyl, Isopropyl, n-Butyl, Isobutyl, tert.-Butyl, Cyanethyl, Methoxyethyl, Ethoxyethyl, Chlorethyl, $\beta$-Hydroxyethyl, $\beta$-Acetoxyethyl, $\beta$-Hydroxypropyl und $\beta,\gamma$-Dihydroxypropyl.

Geeignete gegebenenfalls substituierte $C_1$- bis $C_4$-Alkoxyreste sind:
Methoxy, Ethoxy, Propoxy, Isopropoxy, Butoxy, Methoxyethoxy, Ethoxyethoxy, Butoxyethoxy und Hydroxyethoxy.

Geeignete $C_1$- bis $C_4$-Acyloxyreste sind:
Acetoxy und Propionyloxy.

Als Halogensubstituenten eignen sich Chlor und Brom. Die Verbindungen II werden vorzugsweise durch Nitrierung mit einer Mischung aus 67% Schwefelsäure und 33% Salpetersäure hergestellt. Hierzu eignen sich als Ausgangsverbindungen beispielsweise:
4,4'-Bis-(dimethylamino)-diphenylmethan, 4,4'-Bis-(diethylamino)-diphenylmethan, 3,3'-Dimethyl-4,4'-bis-(dimethylamino)-diphenylmethan, 2,2'-Dimethyl-4,4'-bis-(dimethylamino)-diphenylmethan, 2,2'-Dimethoxy-4,4'-bis-(dimethylamino)-diphenylmethan und 3,3'-Dichlor-4,4'-bis-(dimethylamino)-diphenylmethan.

Die Einwirkung des Zinkpulvers wird vorzugsweise stufenweise zunächst bei 70—100°C und dann bei 100—120°C durchgeführt.

Überraschenderweise führt das Erwärmen der zinkhaltigen Reduktionslösung auf Temperaturen von 100—120°C ohne Zusatz von Oxidationsmittel zu einem reinen Farbstoff in hoher Ausbeute. Es ist anzunehmen, aber nicht Gegenstand dieser Erfindung, daß sauerstoffhaltige Zwischenprodukte der Reduktion an der Oxidation der Leukoverbindung zum Farbstoff beteiligt sind. Da in salzsaurer Lösung mit Zink reduziert wird, fällt der Farbstoff als gut kristallisierendes Zinkchlorid-Doppelsalz aus.

In den DE-C 59 179, 67 609 und 70 935 sind Herstellungsverfahren beschrieben, bei denen zunächst das 2,2'-Diamino-4,4'-bis-(dialkylamino)-diphenylmethan hergestellt wird. Diese Verbindungen werden durch Erhitzen mit konzentrierter Salzsäure in die Dihydroacridin-Verbindungen überführt und anschließend mit Eisenchlorid oxidiert.

In der DE-C 67 609 wird die Oxidation durch Erhitzen in offenen Gefäßen bei 130°C beschrieben; es wird aber darauf hingewiesen, daß die Oxidation mit Eisenchlorid die besseren Resultate liefert.

Auch im britischen Patent 316 315 wird die Oxidation der Leukoverbindung mit Eisenchlorid beschrieben.

Verglichen mit diesen Herstellungsmethoden besitzt das neue Vefahren erhebliche Vorteile, da der

Zusatz eines Oxidationsmittels entfällt und der Farbstoff in einer Stufe aus der Dinitro-Verbindung hergestellt werden kann.

Die Herstellung des nichtalkylierten Diaminoacridins ausgehend von der Dinitroverbindung durch Reduktion in Gegenwart Zink/Schwefelsäure, Ringschluß und anschließende Oxidation in Abwesenheit eines Oxidationsmittels ist aus der DE-C 230 412 bekannt.

Die erfindungsgemäßen Farbstoffe sind zum Färben von Papier, Leder und sauermodifizierten Synthesefasern geeignet; insbesondere eignen sie sich als Zusätze zu Schiffsfarben, um den Bewuchs des Schiffsrumpfes mit Muscheln zu verhindern.

## Beispiel

48,8 g 4,4'-Bis-(dimethylamino)-diphenylmethan werden in 120 g konzentrierter Schwefelsäure gelöst. Die Lösung wird durch Solekühlung auf −15 bis −20°C abgekühlt und bei einer Temperatur von höchstens −5°C 72,6 g einer Mischung von 67% Schwefelsäure und 33% Salpetersäure innerhalb von 2 h eingetropft. Man läßt das Reaktionsgemisch noch 2,5 h nachrühren und trägt es dann auf ein Gemisch von 240 ml Wasser und 500 g Eis aus. Anschließend wird die Lösung mit 275 g 50%iger Natronlauge auf einen pH von 5 gestellt, wobei die Temperatur von 5°C auf 40°C ansteigt. Bei pH 0,3 beginnt 2,2'-Dinitro-4,4'-bis-(dimethylamino)-diphenylmethan kristallin auszufallen. Die gelbbraune Suspension wird 1 h bei 30—40°C nachgerührt, dann bei 40°C abgesaugt und mit 750 ml warmem Wasser gewaschen, bis das Filtrat sulfatfrei ist. Ausbeute: 63,8 g 94,5%ig ≙ 91% der Theorie. Schmelzpunkt: 189—193°C.

In eine Mischung von 310 g 30%iger Salzsäure und 44 ml Wasser trägt man das nach obigem Verren hergestellte 2,2'-Dinitro-4,4'-bis-(dimethylamino)-diphenylmethan ein. Das Zwischenprodukt aus der ersten Stufe kann auch feucht eingesetzt werden. Sobald die Dinitroverbindung gelöst ist, beginnt man mit dem Eintragen von Zinkpulver. Innerhalb von 4 h trägt man 51 g Zinkpulver ein, wobei die Reaktionstemperatur bis auf 50°C ansteigt. Sodann erhitzt man die Suspension innerhalb 1 h auf 85—88°C und rührt bei dieser Temperatur 3 h nach. Dann wird das Reaktionsgemisch im schwachen Stickstoffstrom auf 102—104°C erhitzt und bei dieser Temperatur 18 h nachgerührt. Anschließend kühlt man die Suspension zunächst auf Raumtemperatur und später mit Sole auf −5°C ab. Der Kristallbrei wird 3 h in der Kälte nachgerührt und über eine säurefeste Nutsche isoliert. Man wäscht den Farbstoff mit 55 g 20%iger Kochsalzlösung und trocknet ihn. Ausbeute: 62,8 g Acridinorange (C. I. 46 005).

Verwendet man als Ausgangsmaterial 4,4'-Bis-(dimethylamino)-diphenylmethan oder 3,3'-Dimethyl-4,4'-bis-(dimethylamino)-diphenylmethan und verfährt sonst in gleicher Weise, so erhält man ebenfalls in guter Ausbeute die entsprechenden Acridinfarbstoffe.

**Patentansprüche**

1. Verfahren zur Herstellung von Acridinfarbstoffen der allgemeinen Formel

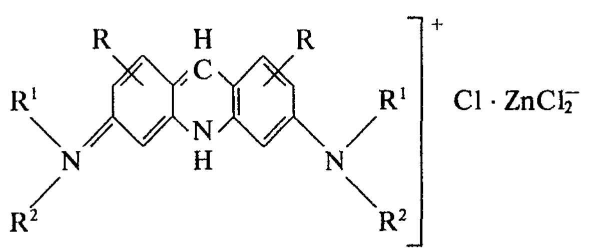

worin

R für Wasserstoff, $C_1$- bis $C_4$-Alkyl, $C_1$- bis $C_4$-Alkoxy oder Halogen und
$R^1$ und $R^2$ unabhängig voneinander für $C_1$- bis $C_4$-Alkyl stehen und

die Alkyl- und Alkoxyreste durch Hydroxy, $C_1$- bis $C_4$-Alkoxy, $C_1$- bis $C_4$-Alkoxy-$C_1$- bis $C_4$-alkoxy, $C_1$- bis $C_4$-Acyloxy, Halogen oder Cyan substituiert sein können,
dadurch gekennzeichnet, daß man Dinitrodiaminodiphenylmethan-Verbindungen der allgemeinen Formel

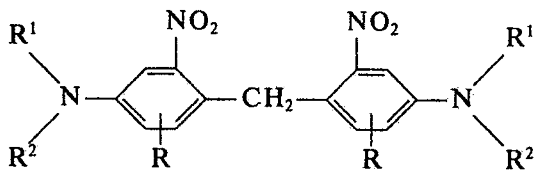

worin

R, $R^1$ und $R^2$ die oben angegebene Bedeutung haben, in Salzsäure löst und der Einwirkung von Zinkpulver unterwirft.

2. Verfahren gemäß Anspruch 1, dadurch gekennzeichnet, daß man die Einwirkung von Zinkpulver zunächst bei einer Temperatur von 70—100°C, dann bei einer Temperatur von 100—120°C durchführt.

3. Verwendung der nach Anspruch 1 hergestellten Farbstoffe zum Färben von Papier, Leder und sauer modifizierten Synthesefasern und als Zusätze zu Schiffsfarben.

## Claims

1. Process for the preparation of acridine dyestuffs of the general formula

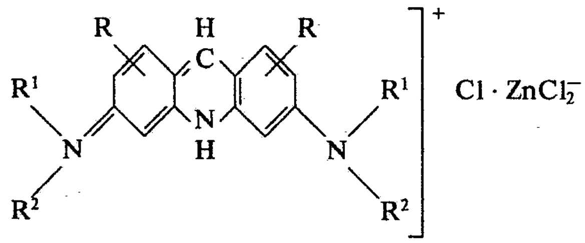

wherein

R represents hydrogen, $C_1$- to $C_4$-alkyl, $C_1$- to $C_4$-alkoxy or halogen and
$R^1$ and $R^2$ independently of one another represent $C_1$- to $C_4$-alkyl, and

the alkyl and alkoxy radicals can be substituted by hydroxyl, $C_1$- to $C_4$-alkoxy, $C_1$- to $C_4$-alkoxy-$C_1$- to $C_4$-alkoxy, $C_1$- to $C_4$-acyloxy, halogen or cyano,
characterised in that dinitrodiaminodiphenylmethane compounds of the general formula

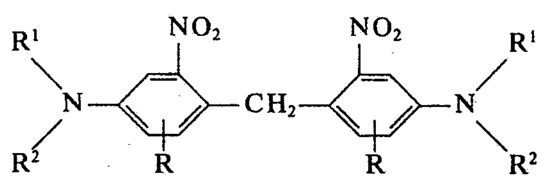

wherein

R, $R^1$ and $R^2$ have the meaning given above, are dissolved in hydrochloric acid and subjected to the action of zinc powder.

2. Process according to Claim 1, characterised in that the action of zinc powder is carried out initially at a temperature of 70—100°C and then at a temperature of 100—120°C.

3. Use of the dyestuffs, prepared according to Claim 1, for dyeing paper, leather and acid-modified synthetic fibres, and as additives to paints for ships.

## Revendications

1. Procédé de préparation de colorants d'acridine de formule générale

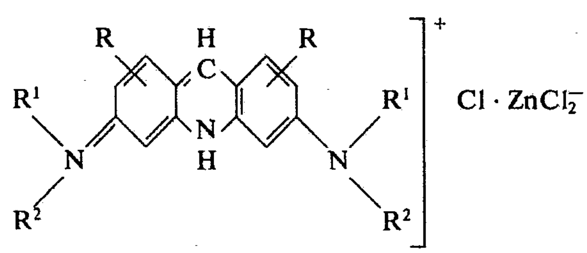

dans laquelle

R représente l'hydrogène, un groupe alkyle en $C_1-C_4$, alcoxy en $C_1-C_4$, ou un halogène et
$R^1$ et $R^2$ représentent, indépendamment l'un de l'autre, des groupes alkyle en $C_1-C_4$ et

les groupes alkyle et alcoxy peuvent porter des substituants hydroxy, alcoxy en $C_1-C_4$, (alcoxy en $C_1-C_4$)-alcoxy en $C_1-C_4$, acyloxy en $C_1-C_4$, halogéno ou cyano, caractérisé en ce que l'on dissout des dérivés du dinitrodiaminodiphénylméthane de formule générale

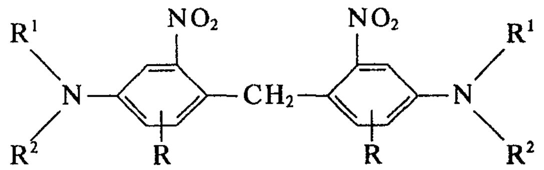

dans laquelle
R, $R^1$ et $R^2$ ont les significations indiquées ci-dessus, dans l'acide chlorhydrique et on soumet à l'action de la poudre de zinc.

2. Procédé selon la revendication 1, caractérisé en ce que l'on fait agir la poudre de zinc d'abord à une température de 70 à 100°C puis à une température de 100 à 120°C.

3. Utilisation des colorants préparés selon la revendication 1 pour la coloration du papier, la teinture du cuir et des fibres synthétiques à modification acide et en tant qu'additifs à des peintures pour navires.